# EUROPÄISCHE PATENTANMELDUNG

(11) **EP 2 177 551 A1**
(43) Veröffentlichungstag der Anmeldung: **21.04.2010**
(21) Anmeldenummer: 08018022.7
(22) Anmeldetag: 15.10.2008
(51) Int. Cl.: C08G 18/10, C08G 18/08, C08G 18/32, C08G 18/38, C08G 18/42, C09J 175/06, C09D 175/06

(54) **Wässrige Polyurethan-Polyharnstoff-Dispersionen**

(71) Anmelder: Bayer MaterialScience AG, 51368 Leverkusen (DE)
(72) Erfinder: Rische, Thorsten, Dr., 59423 Unna (DE); Zastrow, Alfred, 41542 Dormagen (DE); Witkowski, Reiner, Dr., 46242 Bottrop (DE); Werner, Ralf, Dr., 51061 Köln (DE); Kurek, Gerald, Dr., 04155 Leipzig (DE)

(57) **Zusammenfassung**

Die Erfindung betrifft neue wässrige Polyurethanpolyharnstoff-Dispersionen mit monomodaler Teilchengrößenverteilung, ein Verfahren zu deren Herstellung und deren Verwendung zur Herstellung von Beschichtungsmitteln.

## Beschreibung

Die Erfindung betrifft neue wässrige Polyurethanpolyharnstoff-Dispersionen mit monomodaler Teilchengrößenverteilung, ein Verfahren zu deren Herstellung und deren Verwendung zur Herstellung von Beschichtungsmitteln.

Bei der Beschichtung von Substraten werden zunehmend wässrige Bindemittel, insbesondere Polyurethan-Polyharnstoff (PUR)-Dispersionen verwendet. PUR-Dispersionen zeichnen sich im Gegensatz zu vielen anderen wässrigen Bindemittelklassen vor allem durch eine hohe Beständigkeit gegenüber Chemikalien und Wasser, eine hohe mechanische Belastbarkeit sowie eine hohe Zugfestigkeit und Dehnbarkeit aus. Diese Anforderungen werden weitgehend von Polyurethan-Polyharnstoff-Dispersionen des Standes der Technik erfüllt. Die dort genannten Systeme können aufgrund hydrophiler Gruppen selbstemulgierend sein, d.h. sie können ohne Zuhilfenahme externer Emulgatoren in Wasser dispergiert werden und besitzen eine monomodale oder multimodale Teilchengrößenverteilungen.

Die Herstellung von wässrigen PUR-Dispersionen ist grundsätzlich bekannt. Das Prepolymer-Mischverfahren sowie das Acetonverfahren sind die aus dem Stand der Technik bekannten und großtechnisch angewendeten Verfahren zur Herstellung von PUR-Dispersionen. Im Vergleich zum Prepolymer-Mischverfahren können durch das konventionelle Acetonverfahren höherwertige und lösemittelfreie PUR-Dispersionen, die sich insbesondere durch höhere Molekulargewichte, geringere Hydrophilie und engere Teilchengrößenverteilungen und damit bessere Performance im Bereich der Lackbindemittel auszeichnen, hergestellt werden. Im Zuge der stetig wachsenden Anforderungen an PUR-Dispersionen, die zunehmend in vielen Bereichen aus ökologischen Gründen PUR-Beschichtungsmittel mit organischen Lösungsmittel ersetzen, zeigt sich, dass die nach dem konventionellen Acetonverfahren generierbare Produktqualität und -konstanz nicht mehr immer den Erfordernissen des Marktes entsprechen. Wünschenswert wäre daher eine weitere Verbesserung der Teilchengrößenverteilung hin zu noch enger verteilten Systemen, ohne Veränderung der chemischen Zusammensetzung der PUR-Dispersionen. Diese könnten beispielsweise Applikationsprozesse vereinfachen sowie den Zugang zu völlig neuen Anwendungen bzw. Anwendungsgebieten eröffnen.

Die Herstellung von Polyurethandispersionen nach dem Acetonverfahren ist bereits in der DE-A 1570 602, DE-A 1570 615 und DE-A 1694 062 beschrieben. Wie bereits in der EP-A 1 669 382 offenbart, werden Teilchengrößenverteilungen üblicherweise über das Maß an Hydrophilierung in der Polymerkette beeinflusst. Eine Erhöhung der Anzahl an hydrophilen Gruppen führt bei ansonsten gleicher chemischer Zusammensetzung zu PUR-Dispersionen mit niedriger mittlerer Teilchengröße und engerer Teilchengrößenverteilung. Durch die Erhöhung der Hydrophilie der PUR-Dispersion und der daraus resultierenden Beschichtungen werden aber die anwendungstechnischen Eigenschaften dieser negativ beeinflusst, insbesondere in punkto Wasserfestigkeit und -beständigkeit der Beschichtungen. Eine chemische Modifizierung der PUR-Dispersion führt also nach den Kenntnissen des Stands der Technik nicht zu den gewünschten Eigenschaftsverbesserungen.

Die Aufgabe der vorliegenden Erfindung bestand somit in der Bereitstellung von neuen Polyurethan-Polyharnstoff(PUR)-Dispersionen, die bei einem bestimmten Hydrophilierungsgrad über eine verbesserte Verdickbarkeit, bei ansonsten gleichen oder verbesserten anwendungstechnischen Eigenschaften verfügen.

Es wurde nun überraschenderweise gefunden, dass Polyurethan-Polyharnstoff(PUR)-Dispersionen, die bei einem gewissen Hydrophilierungsgrad eine enge, monomodale Teilchengrößenverteilung aufweisen, die oben genannten Anforderungen erfüllen. Des Weiteren wurde ein neues Verfahren zur Herstellung von Polyurethan-Polyharnstoff(PUR)-Dispersionen gefunden.

Gegenstand der vorliegenden Erfindung sind wässrige Polyurethan-Polyharnstoff(PUR)-Dispersionen enthaltend Aufbaukomponenten ausgewählt aus der Gruppe der
A) Polyisocyanate,
B) Polyole mit zahlenmittleren Molekulargewichten von 200 bis 8 000 g/mol,
C) niedermolekulare Verbindungen des Molgewichts 62 bis 400 die in Summe über zwei oder mehr Hydroxyl- und/oder Aminogruppen verfügen,
D) Verbindungen, die über eine Hydroxy- oder Aminogruppe verfügen,
E) isocyanatreaktive, ionisch oder potentiell ionisch hydrophilierende Verbindungen, **dadurch gekennzeichnet, dass** der Gehalt ionischen oder potentiell ionischen Gruppen zwischen 1 bis 200 Milliequivalent, bevorzugt 2 bis 150 Milliequivalent, besonders bevorzugt 5 bis 100 Milliequivalent pro 100 g Festharz beträgt,
F) isocyanatreaktive, nichtionisch hydrophilierenden Verbindungen und
   die Polyurethan-Polyharnstoff(PUR)-Dispersionen über eine monomodale Teilchengrößenverteilung verfügen deren diskretes Maximum zwischen 10 und 400 nm, bevorzugt zwischen 15 und 350 nm und besonders bevorzugt zwischen 15 und 300 nm liegt und die Teilchengröße der Polyurethanpartikel zwischen 1 bis 1500 nm, bevorzugt zwischen 10 bis 800 nm, besonders bevorzugt zwischen die 10 bis 600 nm und ganz besonders bevorzugt zwischen 20 und 550 nm liegt.

Geeignete Polyisocyanate der Komponente A) sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4''-triisocyanat oder Derivate basierend auf den vorstehend genannten Diisocyanaten mit Uretdion-, Isocyanurat-, Urethan-, Allophanat-, Biuret-, Iminooxadiazindion- und/oder Oxadiazintrionstruktur mit mehr als 2 NCO Gruppen.

Als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen.

Besonders bevorzugt sind Hexamethylendiisocyanat, Isophorondiisocyanat, den isomeren Bis-(4,4'-isocyanatocyclohexyl)methane sowie deren Mischungen.

Als Verbindungen B) einsetzbare Polyole weisen bevorzugt ein Molekulargewicht Mn von 400 bis 8000, besonders bevorzugt von 600 bis 3000 auf. Ihre Hydroxylzahl beträgt 22 bis 400 mg KOH/g, bevorzugt 30 bis 200 mg KOH/g und besonders bevorzugt 40 bis 160 mg KOH/g, und weisen eine OH-Funktionalität von 1,5 bis 6, bevorzugt von 1,8 bis 3 und besonders bevorzugt von 2 auf.

Polyole im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/- Formaldehydharze, allein oder in Mischungen.

Gut geeignete Beispiele für Polyesterpolyole sind die an sind die bekannten Polykondensate aus Di- sowie gegebenenfalls Poly(Tri,Tetra)olen und Di- sowie gegebenenfalls Poly(Tri,Tetra)-carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol, Butandiol(1,4), Hexandiol(1,6) oder Neopentylglykol, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlor-phthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigem Hydroxyl verwendet werden können, sind beispielsweise Hydroxycapronsäure, Hydroxybuttersäure, Hydroxydecansäure oder Hydroxystearinsäure. Geeignete Lactone sind z.B. Caprolacton oder Butyrolacton.

Bevorzugt sind difunktionelle aliphatische Polyesterpolyole B), insbesondere lineare Polyesterdiole, wie sie in bekannter Weise aus aliphatischen oder cycloaliphatischen Dicarbonsäuren, wie z.B. Bernstein-, Methylbernstein-, Glutar-, Adipin-, Pimelin-, Kork-, Azelain- , Sebacin-, Nonandicarbon-, Decandicarbon-, Phthal-, Isophthal-, Tetrahydrophthal-, Hexahydrophthal-, Terephthal-, Cyclohexandicarbon-, Malein-, Fumar-, Malonsäure oder deren Gemische mit mehrwertigen Alkoholen, wie z.B. 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische hergestellt werden können. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Besonders bevorzugt sind difunktionelle aliphatische Polyesterpolyole B) auf Basis von Adipinsäure, Phthalsäure oder Isophthalsäure und 1,4-Butandiol, 1,6-Hexandiol, 1,2-Ethandiol, Diethylenglykol oder 2,2-Dimethyl-1,3-propandiol.

Ganz besonders bevorzugt sind difunktionelle aliphatische Polyesterpolyole B) auf Basis Adipinsäure und 1,4-Butandiol, 1,6-Hexandiol, 1,2-Ethandiol, Diethylenglykol oder 2,2-Dimethyl-1,3-propandiol.

Als Verbindungen B) kommen ebenfalls Hydroxylgruppen aufweisenden Polycarbonate des Molekulargewichts Mn von 400 bis 6000, bevorzugt 600 bis 3000 in Frage, die z.B. durch Reaktion von Kohlensäurederivaten, z.B. Diphenylcarbonat, Dimethylcarbonat oder Phosgen mit Polyolen, bevorzugt Diolen erhältlich sind. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente 40 bis 100 Gew.-% Hexandiol, bevorzugt 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch Polyether-Polycarbonatdiole können eingesetzt werden. Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite.

Als Polyetherpolyole entsprechend der Definition der Verbindungen B) geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Ethylenoxid, Propylenoxid, Butylenoxide oder Epichlorhydrins, insbesondere des Propylenoxids.

Die zum Aufbau der Polyurethanharze eingesetzten niedermolekularen Polyole C) bewirken in der Regel eine Versteifung und oder eine Verzweigung der Polymerkette. Das Molekulargewicht liegt bevorzugt zwischen 62 und 200. Geeignete Polyole C) können aliphatische, alicyclische oder aromatische Gruppen enthalten. Genannt seien hier beispielsweise die niedermolekularen Polyole mit bis zu etwa 20 Kohlenstoffatomen je Molekül, wie z. B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), sowie Trimethylolpropan, Glycerin oder Pentaerythrit und Mischungen dieser und gegebenenfalls auch weiterer niedermolekularer Polyole C). Auch Esterdiole wie z.B. α-Hydroxybutyl-ε-hydroxy-capronsäureester, ω-Hydroxyhexyl-γ-hydroxybuttersäure-ester, Adipinsäure-(β-hydroxyethyl)ester oder Terephthalsäurebis(β-hydroxyethyl)-ester können verwendet werden. Bevorzugt werden als niedermolekulare Polyole C) 1,4 Butandiol, 1,3-Butandiol, 1,6-Hexandiol, Neopentylglykol oder Trimethylolpropan verwendet.

Di- oder Polyamine sowie Hydrazide können ebenfalls als C) eingesetzt werden, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid. Bevorzugt werden Ethylendiamin, 1,4-Diaminobutan, 1,6-Diaminohexan, Isophorondiamin, Diethylentriamin oder Hydrazin verwendet. Besonders bevorzugt sind Ethylendiamin, Isophorondiamin, Hydrazin oder deren Mischungen.

Als C) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1- Methylaminobutan, weiterhin Alkanolamine wie N-Aminoethylethanolamin, Ethanolamin, 3-Aminopropanol, Neopentanolamin oder Diethanolamin. Diese können bei der Herstellung der erfindungsgemäßen PUR-Dispersion als Kettenverlängerer und/oder zur Kettenterminierung eingesetzt werden.

Bevorzugte Aufbaukomponenten mit unterschiedlichen funktionellen Gruppen C) sind Ethanolamin, N-Aminoethylethanolamin oder Diethanolamin. Besonders bevorzugt ist Diethanolamin oder N-Aminoethylethanolamin.

Die nach dem erfmdungsgemäßen Verfahren hergestellten PUR-Dispersionen können auch gegebenenfalls Bausteine D) enthalten, die sich jeweils an den Kettenenden befinden und diese abschließen. Diese Bausteine leiten sich zum einen von monofunktionellen, mit NCO-Gruppen reaktiven Verbindungen ab, wie Monoaminen, insbesondere mono-sekundären Aminen oder Monoalkoholen. Genannt seien hier beispielsweise Ethanol, n-Butanol, Ethylenglykolmonobutylether, 2-Ethylhexanol, 1-Octanol, 1-Dodecanol, 1-Hexadecanol, Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen oder primär/tertiäre Amine, wie N,N-Dimethylaminopropylamin.

Unter ionisch bzw. potentiell ionisch hydrophilierenden Verbindungen E) werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, -NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann. Bevorzugte isocyanatreaktive Gruppen sind Hydroxyl- oder Aminogruppen.

Geeignete ionisch oder potentiell ionisch hydrophilierende Verbindungen entsprechend der Definition der Komponente E) sind z.B. Mono- und Dihydroxycarbonsäuren, Mono- und Diaminocarbonsäuren, Mono- und Dihydroxysulfonsäuren, Mono- und Diaminosulfonsäuren sowie Mono-und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS) wie z.B. in der WO-A 01/88006 als Verbindung entsprechend der Definition der Komponente E) verwendet werden.

Bevorzugte ionische oder potentielle ionische Verbindungen E) sind solche, die über Carboxy-oder Carboxylat- und/oder Sulfonatgruppen und/oder Ammoniumgruppen verfügen. Besonders bevorzugte ionische Verbindungen E) sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure oder der Dimethylolbuttersäure.

Geeignete nichtionisch hydrophilierende Verbindungen entsprechend der Definition der Komponente F) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind.

Nichtionisch hydrophilierende Verbindungen F) sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Im Gegensatz zum Stand der Technik, bei welchem normalerweise die Prozessschritte Dispergierung und Destillation nacheinander ablaufen, werden in dem neuen Verfahren zur Herstellung von wässrigen Polyurethan-Polyharnstoff(PUR)-Dispersionen die Prozessschritte Dispergierung und Destillation parallel durchgeführt. Bedingt durch die diese Herstellweise lassen sich bei gleicher chemischer Zusammensetzung PUR-Dispersionen mit engerer Teilchengrößenverteilung erzeugen, die sich insbesondere durch eine verbesserte Verdickbarkeit auszeichnen. Wesentlich für das erfindungsgemäße Verfahren ist jedoch, dass produktabhängig die Raum-Zeit-Ausbeute bei der Herstellung der PUR-Dispersionen signifikant gesteigert werden kann.

Gegenstand der vorliegenden Erfindung ist somit ein Verfahren zur Herstellung von wässrigen Polyurethan-Polyharnstoff-Dispersionen, **dadurch gekennzeichnet, dass** in einem ersten Schritt (I) ein harnstoffgruppenfreies, isocyantfunktionelles Prepolymer durch vollständige oder teilweise Umsetzung von Verbindungen ausgewählt aus der Gruppe
A) Polyisocyanate,
B) Polyole mit zahlenmittleren Molekulargewichten von 200 bis 8000 g/mol,
C') niedermolekulare Verbindungen des Molgewichts 62 bis 400 g/mol, die in Summe über zwei oder mehr Hydroxylgruppen verfügen,
D') Verbindungen, die über eine Hydroxygruppe verfügen,
E) isocyanatreaktive, ionisch oder potentiell ionisch hydrophilierende Verbindungen,
F) isocyanatreaktive, nichtionisch hydrophilierenden Verbindungen,
   hergestellt wird, gegebenenfalls bereits in einem organischen Lösungsmittels, in einem zweiten Schritt (II), wenn nicht in Schritt (I), das isocyanatfunktionelle Prepolymer in einem organischen Lösemittel gelöst wird, in einem dritten Schritt (III) gegebenenfalls die Zugabe von
C") niedermolekularen Verbindungen des Molgewichts 62 bis 400 g/mol, die in Summe über zwei oder mehr Aminogruppen und/oder Hydroxylgruppen verfügen oder
D") Verbindungen, die über eine Aminogruppe und/oder Hydroxylgruppe verfügen,
   erfolgt und anschließend die Dispergierung durch Zugabe von Wasser unter gleichzeitiger Destillation des organischen Lösemittels erfolgt, wobei die Menge an zuströmenden oder zudosierten Dispergierwasser gleich der Menge an abdestilliertem organischen Lösungsmittel ist.

In Schritt (I) des erfindungsgemäßen Verfahrens beträgt das Stoffmengenverhältnis von Isocyanatgruppen zu mit Isocyanat reaktiven Gruppen 1,0 bis 3,5, bevorzugt 1,1 bis 3,0 besonders bevorzugt 1,1 bis 2,5.

Die Reaktionstemperatur im ersten Schritt liegt zwischen 20 - 130 °C, bevorzugt 40 bis 125 °C und besonders bevorzugt zwischen 45 - 125 °C.

Gegebenenfalls werden die in Schritt (I) noch nicht zugegebenen Bestandteile von A) - F) in Schritt (III) zudosiert.

In Schritt (III) des erfmdungsgemäßen Verfahren beträgt das Äquivalentverhältnis von isocyanatreaktiven Gruppen der zur Kettenverlängerung eingesetzten Verbindungen zu freien Isocyanat-Gruppen des Prepolymers zwischen 0 bis 150 %, bevorzugt zwischen 50 bis 120 %, besonders bevorzugt zwischen 60 bis 120 %.

In dem erfindungsgemäßen Verfahren werden als organisches Lösungsmittel bevorzugt ketofunktionelle aliphatische Lösemittel, wie zum Beispiel Aceton oder 2-Butanon, eingesetzt. Besonders bevorzugt wird Aceton verwendet. Andere Lösemittel wie z.B. Xylol, Toluol, Cyclohexan, Butylacetat, Methoxypropylacetat, Lösemittel mit Ether- oder Estereinheiten können ebenfalls eingesetzt werden.

Dadurch, dass die Menge an Dispergierwasser gleich der Menge an Destillat ist, bleibt der Füllgrad des Reaktors während der gesamten Zugabe des Dispergierwassers konstant.

Bei dem erfindungsgemäßen Verfahren wird die Raum-Zeit-Ausbeute um 10 bis 80 %, bevorzugt um 20 bis 70 % und besonders bevorzugt um 25 bis 60 % gesteigert.

Zur Beschleunigung der Isocyanatadditionsreaktion können die in der Polyurethan-Chemie bekannten Katalysatoren eingesetzt werden. Geeignet ist Dibutylzinndilaurat (DBTL), Dibutylzinnoxid, Triethylamin, Zinn(II)-octoat, 1,4-Diazabicyclo[2,2,2]octan (DABCO), 1,4-Diaza-bicyclo[3,2,0]-5-nonen (DBN), 1,4-Diaza-bicyclo[5,4,0]-7-undecen (DBU), Bismutcarboxylate, N,N-Dimethylisopropanolamin, N-Methyl-diethanolamin, Triethanolamin, N,N-Dimethylethanolamin oder N-methyl-diisopropanolamin. Bevorzugt ist Dibutylzinndilaurat.

Die Umsetzung der Komponenten A) - F) zum Prepolymer in Schritt (I) erfolgt teilweise oder vollständig, bevorzugt aber vollständig. Es werden so Polyurethan-Prepolymere, die freie Isocyanatgruppen enthalten, in Substanz oder in Lösung erhalten.

Nach oder während der Herstellung der Polyurethan-Prepolymere in Schritt (I) erfolgt, falls dies noch nicht in den Ausgangsmolekülen durchgeführt wurde; die teilweise oder vollständige Salzbildung der anionisch und/oder kationisch dispergierend wirkenden Gruppen. Im Falle anionischer Gruppen werden dazu Basen wie tertiäre Amine, z.B. Trialkylamine mit 1 bis 12, bevorzugt 1 bis 6 C-Atomen in jedem Alkylrest eingesetzt. Beispiele hierfür sind Trimethylamin, Triethylamin, Methyldiethylamin, Tripropylamin, N-methyl- oder N-ethylmorpholin, Methyldiisopropylamin, Dimethylisopropylamin, Ethyldiisopropylamin und Diisopropylethylamin. Die Alkylreste können beispielsweise auch Hydroxylgruppen tragen, wie bei den Dialkylmonoalkanol-, Alkyldialkanol- oder Trialkanolaminen. Als Neutralisationsmittel sind gegebenenfalls auch anorganische Basen, wie Ammoniak oder Natrium- bzw. Kaliumhydroxid einsetzbar. Bevorzugt sind Triethylamin, Triethanolamin, Dimethylethanolamin oder Diisopropylethylamin.

Die Temperatur bei der Neutralisation beträgt üblicherweise 20 bis 100 °C, bevorzugt 30 bis 80 °C und besonders bevorzugt 40 bis 80 °C.

Die zur Neutralisation benötigte Stoffmenge der Basen liegt zwischen 50 und 125 %, bevorzugt zwischen 70 und 100 % der Stoffmenge der anionischen Gruppen. Im Falle kationischer Gruppen werden Schwefelsäuredimethylester, Phosphorsäure oder Bernsteinsäure eingesetzt. Die Neutralisation kann auch gleichzeitig mit der Dispergierung erfolgen, in dem das Dispergierwasser bereits das Neutralisationsmittel enthält.

Im Anschluss wird in Verfahrensschritt (II), falls noch nicht oder nur teilweise geschehen das erhaltene Prepolymer mit Hilfe von aliphatischen Ketonen wie z.B. Aceton oder 2-Butanon, bevorzugt Aceton gelöst.

Im Schritt (III) der erfindungsgemäßen Verfahrens werden mögliche NH₂- und/oder NHfunktionelle Komponenten (C")/(D")/(E) mit den noch verbliebenen Isocyanatgruppen umgesetzt. Diese Kettenverlängerung/-terminierung kann dabei gegebenenfalls in einem Lösungsmittel, wie z.B. Aceton oder Wasser, vor dem Dispergieren, während des Dispergierens oder nach dem Dispergieren durchgeführt werden. Bevorzugt wird die Kettenverlängerung vor der Dispergierung in Wasser durchgeführt.

Wenn Wasser oder organische Lösemittel als Verdünnungsmittel mit verwendet werden, so beträgt der Verdünnungsmittelgehalt 20 bis 95 Gew.-%, bevorzugt 50 bis 95 Gew.-% und besonders bevorzugt 70 bis 95 %.

Werden zur Kettenverlängerung Verbindungen entsprechend der Definition von E) mit NH₂- oder NH-Gruppen eingesetzt, erfolgt die Kettenverlängerung der Prepolymere bevorzugt vor der Dispergierung.

Die Temperatur des Reaktionsgemischs liegt bei der Kettenverlängerung in Schritt (III) des erfmdungsgemäßen Verfahrens zwischen 30 bis 70°C, bevorzugt 30 bis 60°C, besonders bevorzugt zwischen 35 bis 50°C.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 0 bis 150 %, bevorzugt zwischen 40 bis 150 %, besonders bevorzugt zwischen 50 bis 120 %, ganz besonders bevorzugt zwischen 60 bis 120 %.

Die Herstellung der PUR-Dispersion aus den Prepolymeren erfolgt im Anschluss an die Kettenverlängerung im letzten Schritt des erfindungsgemäßen Verfahrens. Dazu wird das Dispergierwasser zu dem gelösten und kettenverlängerten Polyurethanpolymer unter starker Scherung, wie z.B. starkem Rühren, dosiert. Das Dispergierwasser weist eine Temperatur zwischen 2 und 99 °C, bevorzugt zwischen 20 bis 95 °C, besonders bevorzugt zwischen 40 bis 85 °C und ganz besonders bevorzugt zwischen 55 bis 75 °C auf. Während der Dosierung des Dispergierwassers erfolgt zeitgleich die Destillation des enthaltenen organischen Lösemittels in der Art, dass der Füllstand im Dispergier- bzw. Destillationskessel konstant bleibt.

Der Feststoffgehalt der PUR-Dispersion liegt zwischen 20 bis 70 Gew.-%, bevorzugt 25 bis 65 Gew.-% und besonders bevorzugt zwischen 30 bis 62 Gew.-%.

Die nach dem erfindungsgemäßen Verfahren hergestellten PUR-Dispersionen weisen eine signifikant verbesserte Verdickbarkeit hinsichtlich der Viskosität von 20 bis 95 %, bevorzugt, 30 bis 90 %, besonders bevorzugt von 50 bis 85 % auf.

Die nach dem erfindungsgemäßen Verfahren hergestellten PUR-Dispersionen können Antioxidantien und/oder Lichtschutzmittel und/oder andere Hilfs- und Zusatzmittel wie beispielsweise Emulgatoren, Entschäumer, Verdicker enthalten. Schließlich können auch Füllstoffe, Weichmacher, Pigmente, Ruß- und Kieselsäuresole, Aluminium-, Ton-, Verlaufsmittel oder Thixotropiemittel enthalten sein. Je nach gewünschtem Eigenschaftsbild und Verwendungszweck der nach dem erfindungsgemäßen Verfahren hergestellten PUR-Dispersionen können bis zu 70 %, bezogen auf Gesamttrockensubstanz, solcher Füllstoffe im Endprodukt enthalten sein.

Weiterhin ist es möglich, die nach dem erfindungsgemäßen Verfahren hergestellten PUR-Dispersionen durch Polyacrylate zu modifizieren. Hierzu wird in Gegenwart der PolyurethanDispersion eine Emulsionspolymerisation von olefinisch ungesättigten Monomeren, z. B. Estern aus (Meth)acrylsäure und Alkoholen mit 1 bis 18 C-Atomen, Styrol, Vinylestern oder Butadien durchgeführt, wie es z.B. in der DE-A-1 953 348, EP-A-0 167 188, EP-A-0 189 945 und EP-A-0308 115 beschrieben ist. Die Monomere enthalten eine oder mehrere olefinische Doppelbindungen. Daneben können die Monomere funktionelle Gruppen wie Hydroxyl-, Epoxy-, Methylol- oder Acetoacetoxygruppen enthalten.

Gegenstand der vorliegenden Erfindung sind auch Beschichtungsmittel, enthaltend die erfindungsgemäßen wässrigen Polyurethan-Polyharnstoff-Dispersionen.

Zur Verwendung der nach dem erfindungsgemäßen Verfahren hergestellten PUR-Dispersionen als Beschichtungsmittel werden diese entweder allein oder in Kombination mit anderen wässrigen Bindemitteln eingesetzt. Solche wässrigen Bindemittel können z. B. aus Polyester-, Polyacrylat, Polyepoxid- oder Polyurethanpolymeren aufgebaut sein. Auch die Kombination mit strahlenhärtbaren Bindemitteln, wie sie z. B. in der EP-A-0 753 531 beschrieben sind, ist möglich. Es ist ebenfalls möglich die nach dem erfindungsgemäßen Verfahren hergestellten PUR-Dispersionen mit anderen anionischen oder nicht-ionischen Dispersionen, wie z.B. Polyvinylacetat, Polyethylen-, Polystyrol-, Polybutadien-, Polyvinylchlorid-, Polyacrylat- und Copolymerisat-Dispersionen, zu verschneiden.

Weiterer Gegenstand der vorliegenden Erfindung ist die Verwendung der nach dem erfindungsgemäßen Verfahren hergestellten Polyurethan-Polyharnstoff-Dispersionen als Beschichtungsmittel zur Herstellung beschichteter Substrate.

Geeignete Substrate sind beispielsweise gewebte und nicht gewebte Textilien, Leder, Papier, Hartfaser, Stroh, papierartigen Materialien, Holz, Glas, Kunststoffen der verschiedensten Art, Keramik, Stein, Beton, Bitumen, Porzellan, Metalle oder Glasfasern.

Die nach dem erfindungsgemäßen Verfahren hergestellten Polyurethan-Polyharnstoff-Dispersionen eignen sich ebenfalls zur Herstellung von Schlichten- oder Klebstoffsystemen.

Die nach dem erfindungsgemäßen Verfahren hergestellten PUR-Dispersionen sind stabil, lager-und versandfähig und können zu beliebig späterem Zeitpunkt verarbeitet werden.

Je nach der gewählten chemischen Zusammensetzung und Gehalt an Urethangruppen erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180°C, thermoplastisch verarbeiten, sofern sie nicht chemisch vernetzt sind.

### Beispiele:

Soweit nicht abweichend angegeben sind alle Prozentangaben als Gewichtsprozent zu verstehen.

### Verwendete Substanzen und Abkürzungen:

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

Die Eigenschaften von PUR-Dispersionen werden an freien Filmen bestimmt, die wie folgt hergestellt werden:
Die Bestimmung der mittleren Teilchengrößen (angegeben ist das Zahlenmittel) der PUR-Dispersionen erfolgte mittels Laserkorrelations-Spektroskopie (Gerät: Malvern Zetasizer 1000, Malver Inst. Limited).
Die Bestimmung der Teilchengrößenverteilungen erfolgt mit der Methode der analytischen Ultrazentrifugation, die in der Literatur ausführlich beschrieben ist:
   1. W. Scholtan, H. Lange, Kolloid-Z. u. Z. Polymere 250 (1972) 782
   2. H.G,. Müller, Colloid Polym Sci 267 (1989) 1113

Bei den erhaltenen Verteilungen handelt es sich um Massenverteilungen.

Die angegebenen Viskositäten verstehen sich als Auslaufzeiten, gemessen gemäß DIN 53 211 im DIN-Becher 4 mm.

Die Viskositäten wurden gemäß DIN EN ISO 3219 / A3 ermittelt.

### A) Bestimmung der Anfangswärmefestigkeit

Die Anfangswärmefestigkeitsprüfung wird einkomponentig (ohne Vernetzer) durchgeführt.

### Prüfmaterial/Prüfkörper

a) Renolit-Folie (32052096 Strukton; Rhenolit AG, 67547 Worms / Deutschland) Abmessungen: 50 × 300 × 0,2 mm
b) Buchenholz (gehobelt)
   Abmessungen: 50 × 140 × 4,0 mm

### Klebung und Messung

Die Klebstoffdispersion wird mit einem 200 µm-Rakel auf den Holzprüfkörper aufgetragen. Die Klebfläche beträgt 50 × 110 mm. Die Ablüftzeit des aufgetragenen Klebstoffes beträgt mindestens 3 Stunden bei Raumtemperatur. Anschließend werden die beiden Prüfkörper übereinander gelegt und 10 s bei 4 bar Druck bei 77°C gefügt. Unmittelbar anschließend wird der Prüfkörper ohne Gewicht 3 min bei 80°C getempert, danach 5 min bei 80°C mit 2,5 kg senkrecht zur Klebefuge (180°-Peel) belastet. Gemessen wird die Strecke, die sich die Verklebung gelöst hat, in Millimetern. Die Anfangswärmefestigkeit wird in mm/min angegeben.

Die Schälfestigkeiten nach Anwendung des Verfahrens der Nassverklebung und des Thermoaktivierverfahrens können nach folgenden Methoden bestimmt werden:

### B) Bestimmung der Schälfestigkeit (2K):

### 2K-Klebung: Klebstoff mit 3% Vernetzerisocyanat Desmodur^{®} DN (Bayer MaterialScience AG, Lev., DE)

### Prüfmaterial/Prüfkörper

a) Buchenholz (gehobelt)
   Abmessungen: 30 x 210 x 4,0 mm
b) Hart-PVC-Kaschierfolie (Benelit^{®} RTF; Benecke-Kaliko AG, Hannover/D)
   Abmessungen: 30 × 210 × 0,4 mm

### Klebung und Messung

Die Klebstoffdispersion wird mittels eines Pinsels auf den Buchenholzprüfkörper aufgetragen. Die Klebfläche beträgt 30 x 90 mm. Nach einer Trocknungszeit von 30 Minuten bei Raumtemperatur wird eine zweite Klebstoffschicht über die erste aufgetragen und anschließend 60 Minuten bei Raumtemperatur getrocknet. Anschließend werden die beiden Prüfkörper übereinander gelegt und 10 s bei 4 bar Druck und 100°C gefügt.

Nach dreitägiger Lagerung der Prüfkörper bei Raumtemperatur wird die PVC-Folie im Winkel von 180°C zur Klebefuge mit einer Geschwindigkeit von 30 mm pro Minute abgezogen und die dafür benötigte Kraft (=Schälfestigkeit) gemessen. Es wird eine Doppelbestimmung durchgeführt und der Durchschnittswert angegeben.

### C) Prüfung der Verdickbarkeit

Zur Prüfung der Verdickbarkeit werden 200,0 g Polyurethandispersion in einem Becherglas bei Raumtemperatur vorgelegt. Anschliessend werden unter Rühren mittels 45 mm-Dissolverscheibe und einer Drehzahl von ca. 300 U/min. 2,0 g Verdickungsmittel (z.B. Borchigel^{®} ALA (Borchers GmbH, Lev., DE) zugegeben und 30 sek. verrührt. Anschliessend wird 5 Minuten mit einer Drezähl von 2000 U/min. weiter verrührt. Die Viskosität der Dispersion wird mit einem HAAKE Viskosimeter VT 550 mit einem Messkörper E 100 bei 23°C gemessen.

### D) Bestimmung der Zug-Dehnungseigenschaften von freien Filmen

Die Eigenschaften von PUR-Dispersionen werden an freien Filmen bestimmt, die wie folgt hergestellt werden:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Fihndicke (nass) der resultierenden Beschichtung, und kann auf die gewünschte Auflage jedes Striches eingestellt werden. Die Beschichtung ist auch konsekutiv in mehreren Strichen möglich.

Zum Aufbringen der einzelnen Striche werden die Produkte (wässrige Formulierungen werden vorher durch Zugabe von Ammoniak/ Polyacrylsäure auf eine Viskosität von 4500 mPa s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des Moduls bei 100 % Dehnung, erfolgte nach DIN 53504 an Filmen > 100 µm Stärke.

**Einsatzstoffe**

| | |
|---|---|
| Polyester I: | 1,4-Butandiolpolyadipatdiol der OH-Z = 50 |
| Polyester II: | Polyesterdiol aus 1,6-Hexandiol, Neopentylglykol und Adipinsäure der OH-Z = 66 |
| Desmodur^{®} H: | Hexamethylendiisocyanat-1,6 (Bayer MaterialScience AG, Leverkusen/D) |
| Desmodur^{®} I: | Isophorondiisocyanat (Bayer MaterialScience AG, Leverkusen/D) |

**Beispiel 1: Vergleichsbeispiel PUR-Dispersion (1) nach Standard-Acetonverfahren aus** DE-A 37,28,140**, Bsp. 1**

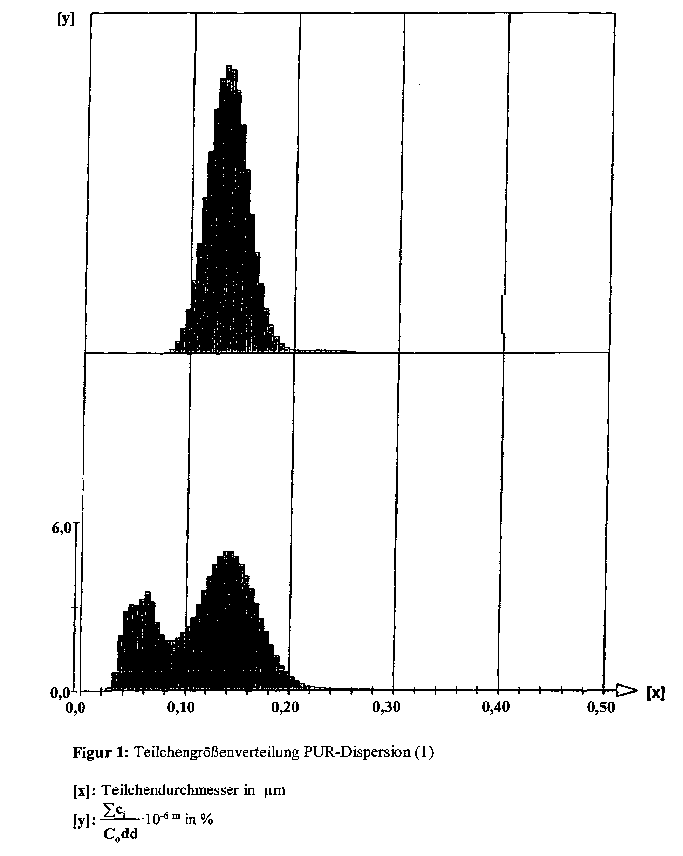

360 g Polyester I werden 1 Stunde bei 120°C unter Vakuum entwässert. Bei 80°C werden 23,35 g Desmodur^{®} H und anschließend 15,30 g Desmodur^{®} I zugegeben. Die Mischung wird bei 80 °C gerührt, bis ein konstanter Isocyanatgehalt von 0,90 - 1,01 % erreicht ist. Das Reaktionsgemisch wird in 800 g Aceton gelöst und dabei auf 50°C abgekühlt. In die homogene Lösung wird eine Lösung aus 5,8 g Natriumsalz der N-(2-Aminoethyl)-2-aminoethansulfonsäure (0,031 mol) und 2,1 g Diethanolamin (0,02 mol) in 55 g Wasser unter Rühren zugegeben. Nach 7 Minuten wird durch Zugabe von 565 g 20 °C warmen Wasser dispergiert. Nach destillativer Abtrennung des Acetons wird eine lösemittelfreie, wässrige Polyurethan-Polyharnstoff-Dispersion mit einen Feststoffgehalt von 40 Gew.-% und einer mittlere Teilchengröße der dispersen Phase, ermittelt durch Laserkorrelation, von 152 nm erhalten. Das Maximum des Feinanteils in der Teilchengrößenverteilung betrug 62 nm, das Maximum des Grobanteils 140 nm. Die Dispersionspartikel des Feinanteils hatten Teilchengrößen zwischen 22 nm und 82 nm. Die Dispersionspartikel des Grobanteils hatten Teilchengrößen zwischen 23 nm und 240 nm (Figur 1).

### Beispiel 2: PUR-Dispersion (1) nach erfindungsgemäßen Verfahren

360 g Polyester I werden 1 Stunde bei 120°C unter Vakuum entwässert. Bei 80°C werden 23,35 g Desmodur^{®} H und anschließend 15,30 g Desmodur^{®} I zugegeben. Die Mischung wird bei 80 °C gerührt, bis ein konstanter Isocyanatgehalt von 0,90 - 1,01 % erreicht ist. Das Reaktionsgemisch wird in 800 g Aceton gelöst und dabei auf 50°C abgekühlt. In die homogene Lösung wird eine Lösung aus 5,8 g Natriumsalz der N-(2-Aminoethyl)-2-aminoethansulfonsäure (0,031 mol) und 2,1 g Diethanolamin (0,02 mol) in 55 g Wasser unter Rühren zugegeben. Nach 7 Minuten wird zeitgleich mit der Dispergierung (Zugabe von Wasser) und destillativen Abtrennung des Acetons begonnen. Hierzu werden 565 g an 65 °C warmen Wasser so zudosiert, dass der Füllgrad des Reaktionsgefässes konstant bleibt. Es wird eine lösemittelfreie, wässrige Polyurethan-Polyharnstoff-Dispersion mit einen Feststoffgehalt von 40 Gew.-% und einer mittlere Teilchengröße der dispersen Phase, ermittelt durch Laserkorrelation, von 141 nm erhalten. Das Maximum in der monomodalen Teilchengrößenverteilung betrug 140 nm. Die Dispersionspartikel hatten Teilchengrößen zwischen 82 nm und 220 nm (Figur 1).

Die Raum-Zeit Ausbeute wird im Vergleich zur PUR-Dispersion (1) aus Beispiel 1 um 45 % erhöht.

Die Ultrazentrifugenergebnisse (Figur 1) belegen, dass die Teilchengrößenverteilung der nach dem erfindungsgemäßen Verfahren hergestellten PUR-Dispersion (Beispiel 2) im Vergleich zur analogen Dispersion, hergestellt nach dem Verfahren des Stands der Technik, (Beispiel 1) signifikant enger verteilt sind.

Bei ansonsten vergleichbaren anwendungstechnischen Eigenschaften, weist die nach dem erfindungsgemäßen Verfahren hergestellte PUR-Dispersion aus Beispiel 2 im Vergleich zur PUR-Dispersion des Stands der Technik (Beispiel 1) eine signifikant höhere Verdickbarkeit auf.

**Tabelle 1:**

| | **Beispiel 1 (Vergleich)** | **Beispiel 2 (erfindungsgemäß)** |
|---|---|---|
| Festkörpergehalt [%] | 40,6 | 40,2 |
| pH-Wert | 6,6 | 6,6 |
| Viskosität [mPas] | 186 | 198 |
| MTG [nm] | 152 | 141 |
| **Schälfestigkeit auf Weich PVC (65°C)** | | |
| 2 K initial [N/mm] | 5,4 | 5,3 |
| 2 K final [N/mm] | 10,2 | 10,4 |
| **Anfangswärmefestigkeit** | | |
| AWF-Test [mm/min] | 3,7 | 3,0 |
| **Verdickbarkeit [mPas]** | 2000 | 3000 |

### Beispiel 3: Vergleichsbeispiel: PUR-Dispersion (2) nach dem Standard-Acetonverfahren

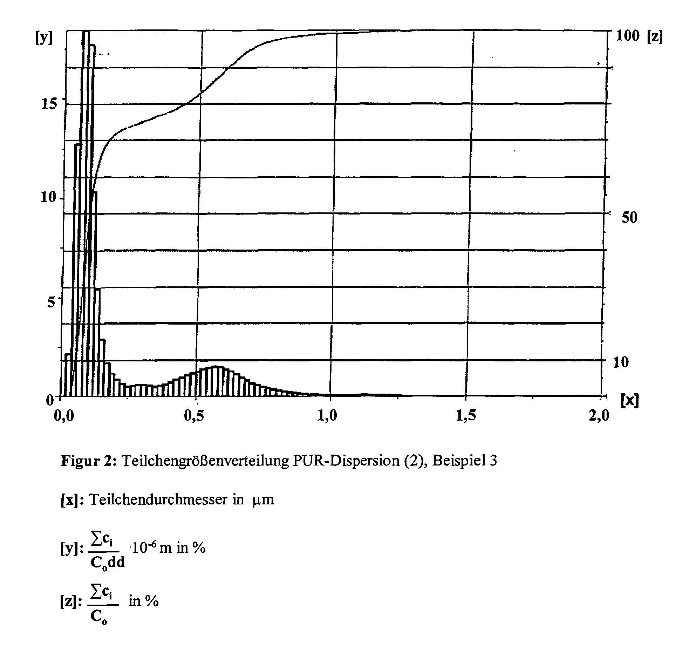

Anionische, aliphatische Polycarbonatesterpolyetherpolyurethan-Dispersion mit einem Feststoffgehalt von ca. 40 %. Die Dispergierung mit 20 °C warmen Wasser und die Destillation erfolgen bei der Herstellung nacheinander. Das Maximum des Feinanteils in der Teilchengrößenverteilung betrug 71 nm, das Maximum des Grobanteils 571 nm. Die Dispersionspartikel des Feinanteils hatten Teilchengrößen zwischen 31 nm und 312 nm. Die Dispersionspartikel des Grobanteils hatten Teilchengrößen zwischen 313 nm und 1276 nm (Figur 2).

### Beispiel 4: PUR-Dispersion (2) nach erfindungsgemäßen Verfahren

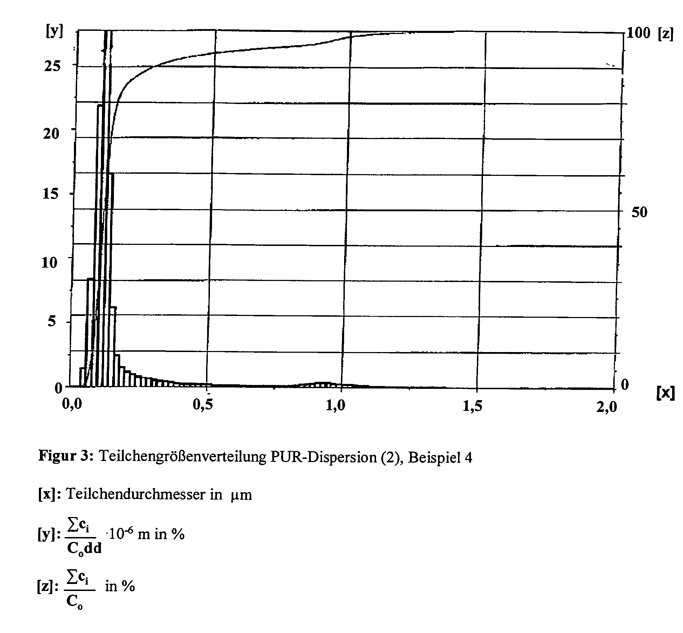

Anionische, aliphatische Polycarbonatesterpolyetherpolyurethan-Dispersion mit einem Feststoffgehalt von ca. 40 %. Die Raum-Zeit Ausbeute wir im Vergleich zur PUR-Dispersion aus Beispiel 5 um 50 % erhöht. Die Dispergierung mit 65 °C warmen Wasser und die Destillation erfolgen bei der Herstellung parallel. Das Maximum in der monomodalen Teilchengrößenverteilung betrug 116 nm. Die Dispersionspartikel hatten Teilchengrößen zwischen 43 nm und 1100 nm (Figur 3).

**Tabelle 2:**

| | **Beispiel 4 (erf.gemäß)** | **Beispiel 3 (Vergleich)** |
|---|---|---|
| **Kenndaten** | | |
| nfA, %: | 40,0 | 39,9 |
| Auslaufzeit, s | 15 | 16 |
| pH-Wert | 6,5 | 6,6 |
| mittlere TG | 142 | 139 |
| Verdickbarkeit, mPa*s | 5300 | 3000 |
| **Filmeigenschaften** | | |
| Modul 100% | 1,7 | 1,8 |
| 0-Wert | 19,0/1130 | 20,1/1020 |
| 24h Wasserlagerung | 13,0/870 | 12,5/720 |
| Quellung in EE | 266 | 342 |
| Quellung in Wasser | 26 | 6 |
| Hydrolyse 2 W | 17,1/1050 | 19,8/1020 |
| Hydrolyse 4 W | 16,3/970 | 17,3/960 |

Bei ansonsten vergleichbaren anwendungstechnischen Eigenschaften, weist die nach dem erfindungsgemäßen Verfahren hergestellte PUR-Dispersion (3) aus Beispiel 6 im Vergleich zur PUR-Dispersion des Stands der Technik (Beispiel 5) eine signifikant höhere Verdickbarkeit auf.

Die Ultrazentrifugenergebnisse (Figuren 2 und 3) belegen, dass die Teilchengrößenverteilung der nach dem erfindungsgemäßen Verfahren hergestellten PUR-Dispersion (2) (Beispiel 4) im Vergleich zur analogen Dispersion, hergestellt nach dem Verfahren des Stands der Technik, (Beispiel 3) signifikant enger verteilt sind.
**Beispiel 5: Vergleichsbeispiel PUR-Dispersion (3) nach dem Standard-Acetonverfahren aus** WO-A 2007/022885 **(Beispiel 1)**

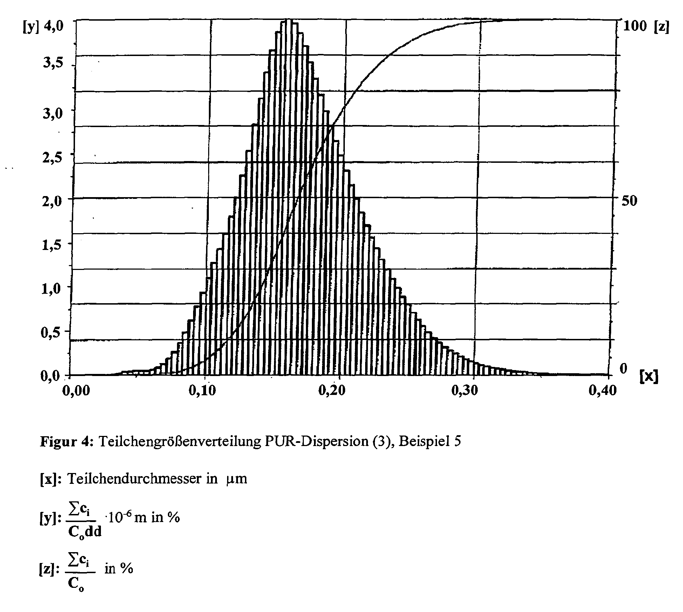

350,0 g eines difunktionellen Polyesterpolyols auf Basis Adipinsäuresäure, 1,6-Hexandiol (mittleres Molgekulargewicht 1700 g/mol, OHZ = ca. 66 mg KOH / g Substanz) wurde auf 65°C aufgeheizt. Anschließend wurde bei 65°C innerhalb von 5 min 60,1 g Hexamethylendiisocyanat zugegeben und solange bei 100°C gerührt bis der theoretische NCO-Wert von 3,2 % erreicht wurde. Das fertige Prepolymer wurde mit 750 g Aceton bei 50°C gelöst und anschließend eine Lösung aus 3,5 g Ethylendiamin, 9,9 g Natriumsalz der N-(2-Aminoethyl)-2-aminoethansulfonsäure und 131,0 g Wasser innerhalb von 5 min zudosiert. Die Nachrührzeit betrug 15 min. Anschließend wurde innerhalb von 10 min durch Zugabe von 513,0 g Wasser dispergiert. Es folgte die Entfernung des Lösemittels durch Destillation im Vakuum und es wurde eine lagerstabile PUR-Dispersion mit einem Festkörpergehalt von 40,2 % und einer Teilchengröße von 220 nm erhalten. Das Maximum des der Teilchengrößenverteilung betrug 157 nm. Die Dispersionspartikel hatten Teilchengrößen zwischen 31 nm und 400 nm (Figur 4).

### Beispiel 6: PUR-Dispersion (3) nach erfindungsgemäßen Verfahren

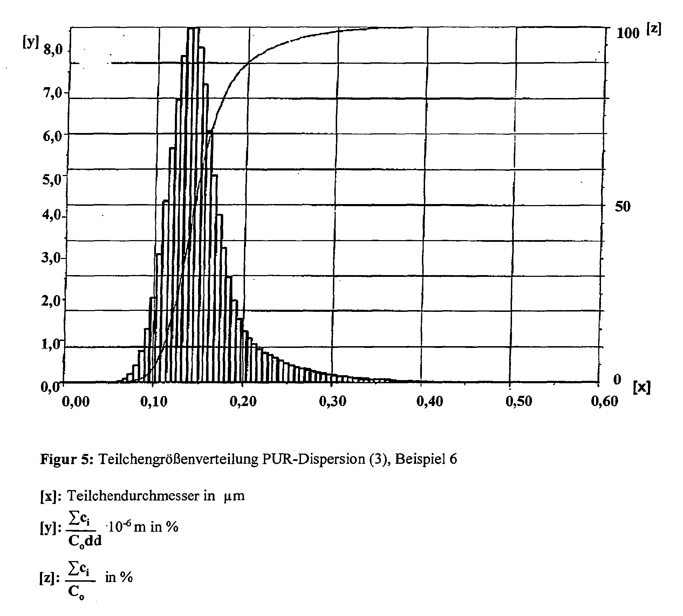

350,0 g eines difunktionellen Polyesterpolyols auf Basis Adipinsäuresäure, 1,6-Hexandiol (mittleres Molgekulargewicht 1700 g/mol, OHZ = ca. 66 mg KOH / g Substanz) werden auf 65°C aufgeheizt. Anschließend werden bei 65°C innerhalb von 5 min 60,1 g Hexamethylendiisocyanat zugegeben und solange bei 100°C gerührt bis der theoretische NCO-Wert von 3,2 % erreicht wird. Das fertige Prepolymer wird mit 750 g Aceton bei 50°C gelöst und anschließend eine Lösung aus 3,5 g Ethylendiamin, 9,9 g Natriumsalz der N-(2-Aminoethyl)-2-aminoethansulfonsäure und 131,0 g Wasser innerhalb von 5 min zudosiert. Nach 15 Minuten wird zeitgleich mit der Dispergierung (Zugabe von Wasser) und destillativen Abtrennung des Acetons begonnen. Hierzu werden 513 g Wasser so zudosiert, dass der Füllgrad des Reaktionsgefässes konstant bleibt. Es wird eine lösemittelfreie, wässrige Polyurethan-Polyharnstoff-Dispersion mit einen Feststoffgehalt von 40,2 Gew.-% und einer mittlere Teilchengröße der dispersen Phase, ermittelt durch Laserkorrelation, von 179 nm erhalten. Das Maximum des der Teilchengrößenverteilung betrug 140 nm. Die Dispersionspartikel hatten Teilchengrößen zwischen 56 nm und 390 nm (Figur 5).

Die Raum-Zeit Ausbeute wir im Vergleich zur PUR-Dispersion aus Beispiel 7 um 33 % erhöht.

**Tabelle 3:**

| | **Beispiel 6 (erfindungsgemäß)** | **Beispiel 5 (Vergleich)** |
|---|---|---|
| **Kenndaten** | | |
| nfA, %: | 40,2 | 40,2 |
| Auslaufzeit, s | 15 | 15 |
| pH-Wert | 6,7 | 7,0 |
| mittlere TG | 179 | 220 |
| D [v.0,9], µm | 0,19 | 0,25 |
| Verdickbarkeit, mPa*s | 5000 | 2700 |
| **Filmeigenschaften** | | |
| Modul 100% | 2,1 | 1,9 |
| 0 - Wert | 42,5 / 1500 | 40,9 / 1480 |
| 24h Wasserlagerung | 25,3 / 1620 | 24,7 / 1730 |
| Quellung in EE | 259 | 100 |
| Quellung in Wasser | 0 | 6 |
| Hydrolyse 2 W | zerlaufen | zerlaufen |
| Hydrolyse 4 W | zerlaufen | zerlaufen |

Bei ansonsten vergleichbaren anwendungstechnischen Eigenschaften, weist die nach dem erfindungsgemäßen Verfahren hergestellte PUR-Dispersion (4) aus Beispiel 8 im Vergleich zur PUR-Dispersion des Stands der Technik (Beispiel 7) eine signifikant höhere Verdickbarkeit auf.

Die Ultrazentrifugenergebnisse (Figuren 4 und 5) belegen, dass die Teilchengrößenverteilung der nach dem erfindungsgemäßen Verfahren hergestellten PUR-Dispersion (3) (Beispiel 6) im Vergleich zur analogen Dispersion, hergestellt nach dem Verfahren des Stands der Technik, (Beispiel 5) signifikant enger verteilt sind.
**Beispiel 7: Vergleichsbeispiel PUR-Dispersion (4) nach dem Standard-Acetonverfahren (Beispiel 1 /** DE-A 2651506**)**

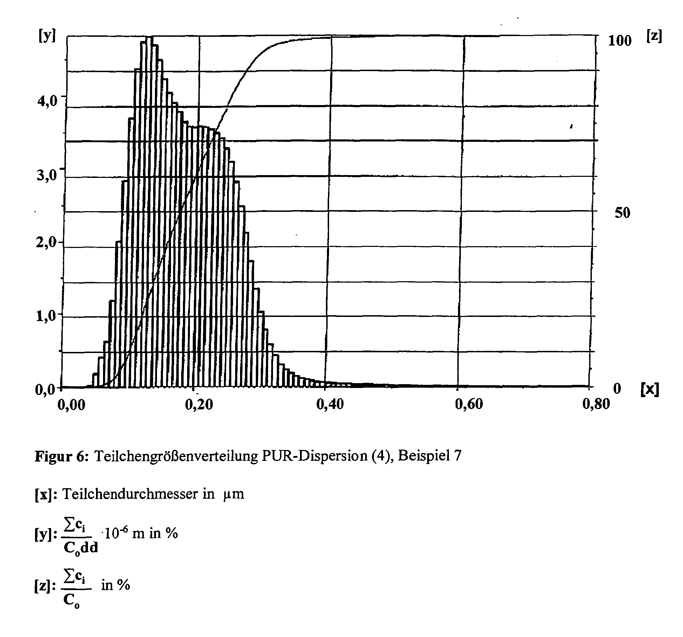

360,0 g eines difunktionellen Polyesterpolyols auf Basis Adipinsäuresäure, 1,6-Hexandiol und Neopentylglykol (mittleres Molgekulargewicht 1700 g/mol, OHZ = ca. 66 mg KOH / g Substanz) und 18,75 g eines Polyethermonoalkohols aus n-Butanol, Ethylenoxid und Propylenoxid (im Molverhältnis 83:17) der OH-Zahl 30) wird auf 65°C aufgeheizt. Anschließend wird bei 65°C innerhalb von 5 min 40,8 g Desmodur^{®} H und 53,87 g Desmodur^{®} I zugegeben und solange bei 100°C gerührt bis der theoretische NCO-Wert von 4,7 % erreicht ist. Das fertige Prepolymer wird mit 700 g Aceton bei 50°C gelöst und anschließend eine Lösung aus 2,21 g Hydrazinmonohydrat, 6,58 g Natriumsalz der N-(2-Aminoethyl)-2-aminoethansulfonsäure, 23,0 g Isophorondiamin und 57,0 g Wasser innerhalb von 5 min zudosiert. Die Nachrührzeit beträgt 10 Minuten. Anschließend wird innerhalb von 10 min durch Zugabe von 20 °C warmen 500,0 g Wasser dispergiert. Es folgte die Entfernung des Lösemittels durch Destillation im Vakuum und es wird eine lagerstabile PUR-Dispersion mit einem Festkörpergehalt von 50,3 % und einer Teilchengröße von 198 nm erhalten. Das Maximum des Feinanteils der Teilchengrößenverteilung betrug 114 nm, das Maximum des Grobanteils der Teilchengrößenverteilung betrug 200 nm. Die Dispersionspartikel des Feinanteils hatten Teilchengrößen zwischen 47 nm und 198 nm. Die Dispersionspartikel des Grobanteils hatten Teilchengrößen zwischen 199 nm und 654 nm (Figur 6).

### Beispiel 8: PUR-Dispersion (4) nach erfindungsgemäßen Verfahren

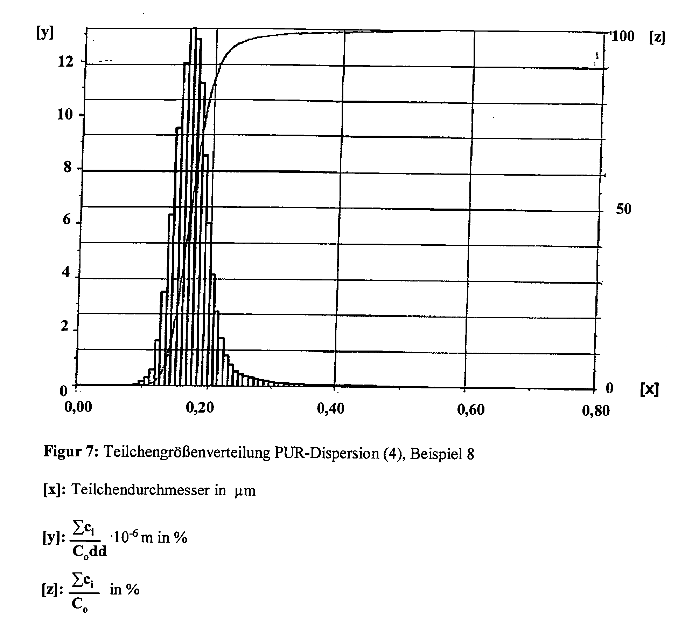

360,0 g eines difunktionellen Polyesterpolyols auf Basis Adipinsäuresäure, 1,6-Hexandiol und Neopentylglykol (mittleres Molgekulargewicht 1700 g/mol, OHZ = ca. 66 mg KOH / g Substanz) und 18,75 g eines Polyethermonoalkohols aus n-Butanol, Ethylenoxid und Propylenoxid (im Molverhältnis 83:17) der OH-Zahl 30) wird auf 65°C aufgeheizt. Anschließend wird bei 65°C innerhalb von 5 min 40,8 g Desmodur^{®} H und 53,87 g Desmodur^{®} I zugegeben und solange bei 100°C gerührt bis der theoretische NCO-Wert von 4,7 % erreicht ist. Das fertige Prepolymer wird mit 700 g Aceton bei 50°C gelöst und anschließend eine Lösung aus 2,21 g Hydrazinmonohydrat, 6,58 g Natriumsalz der N-(2-Aminoethyl)-2-aminoethansulfonsäure, 23,0 g Isophorondiamin und 57,0 g Wasser innerhalb von 5 min zudosiert. Nach 10 Minuten wird zeitgleich mit der Dispergierung (Zugabe von Wasser) und destillativen Abtrennung des Acetons begonnen. Hierzu werden 500 g 60°C warmes Wasser so zudosiert, dass der Füllgrad des Reaktionsgefässes konstant bleibt. Es wird eine lösemittelfreie, wässrige Polyurethan-Polyharnstoff-Dispersion mit einen Feststoffgehalt von 50,3 Gew.-% und einer mittlere Teilchengröße der dispersen Phase, ermittelt durch Laserkorrelation, von 185 nm erhalten. Das Maximum in der monomodalen Teilchengrößenverteilung betrug 157 nm. Die Dispersionspartikel hatten Teilchengrößen zwischen 89 nm und 547 nm (Figur 7).

Die Raum-Zeit Ausbeute wird nach dem erfindungsgemäßen Verfahren (Beispiel 8) im Vergleich zur PUR-Dispersion des Stands der Technik aus Beispiel 7 um 25 % erhöht.

**Tabelle 4:**

| | **Beispiel 8 (erfindungsgemäß)** | **Beispiel 7 (Vergleich)** |
|---|---|---|
| **Kenndaten** | LEV | Kenndaten DOR |
| nfA, %: | 50,3 | 50,3 |
| Auslaufzeit, s | 18 | 20 |
| pH-Wert | 7,2 | 7,2 |
| mittlere TG | 185 | 198 |
| Verdickbarkeit, mPa*s | 5300 | 3100 |
| **Filmeigenschaften** | | |
| Modul 100% | 2,7 | 2,3 |
| 0 - Wert | 30,9/980 | 22,0/1000 |
| 24h Wasserlagerung | 12,4/1100 | 11,4/910 |
| Quellung in EE | 342 | 380 |
| Quellung in Wasser | 6 | 13 |
| Hydrolyse 2 W | zerlaufen | zerlaufen |
| Hydrolyse 4 W | zerlaufen | zerlaufen |

Die Ultrazentrifugenergebnisse (Figuren 6 und 7) belegen, dass die Teilchengrößenverteilung der nach dem erfmdungsgemäßen Verfahren hergestellten PUR-Dispersion (4) (Beispiel 8) im Vergleich zur analogen Dispersion, hergestellt nach dem Verfahren des Stands der Technik, (Beispiel 7) signifikant enger verteilt sind.

## Patentansprüche

1. Wässrige Polyurethan-Polyharnstoff(PUR)-Dispersionen enthaltend Aufbaukomponenten ausgewählt aus der Gruppe der
A) Polyisocyanate,
B) Polyole mit zahlenmittleren Molekulargewichten von 200 bis 8 000 g/mol,
C) niedermolekulare Verbindungen des Molgewichts 62 bis 400 die in Summe über zwei oder mehr Hydroxyl- und/oder Aminogruppen verfügen,
D) Verbindungen, die über eine Hydroxy- oder Aminogruppe verfügen,
E) isocyanatreaktive, ionisch oder potentiell ionisch hydrophilierende Verbindungen, **dadurch gekennzeichnet, dass** der Gehalt ionischen oder potentiell ionischen Gruppen zwischen 1 bis 200 Milliequivalent pro 100 g Festharz beträgt,
F) isocyanatreaktive, nichtionisch hydrophilierenden Verbindungen und
die Polyurethan-Polyharnstoff(PUR)-Dispersionen über eine monomodale Teilchengrößenverteilung verfügen deren diskretes Maximum zwischen 10 und 400 nm liegt und die Teilchengröße der Polyurethanpartikel zwischen 1 bis 1500 nm liegt.

2. Verfahren zur Herstellung von wässrigen Polyurethan-Polyharnstoff-Dispersionen, **dadurch gekennzeichnet, dass** in einem ersten Schritt (I) ein harnstoffgruppenfreies, isocyantfunktionelles Prepolymer durch vollständige oder teilweise Umsetzung von Verbindungen ausgewählt aus der Gruppe
A) Polyisocyanate,
B) Polyole mit zahlenmittleren Molekulargewichten von 200 bis 8 000 g/mol,
C') niedermolekulare Verbindungen des Molgewichts 62 bis 400, die in Summe über zwei oder mehr Hydroxylgruppen verfügen,
D') Verbindungen, die über eine Hydroxygruppe verfügen,
E) isocyanatreaktive, ionisch oder potentiell ionisch hydrophilierende Verbindungen,
F) isocyanatreaktive, nichtionisch hydrophilierenden Verbindungen, hergestellt wird, gegebenenfalls bereits in einem organischen Lösungsmittels, in einem zweiten Schritt (II), wenn nicht in Schritt (I), das isocyanatfunktionelle Prepolymer in einem organischen Lösemittel gelöst wird, in einem dritten Schritt (III) gegebenenfalls die Zugabe von
C") niedermolekularen Verbindungen des Molgewichts 62 bis 400, die in Summe über zwei oder mehr Aminogruppen und/oder Hydroxylgruppen verfügen oder
D") Verbindungen, die über eine Aminogruppe und/oder Hydroxylgruppe verfügen,
erfolgt und anschließend die Dispergierung durch Zugabe von Wasser unter gleichzeitiger Destillation des organischen Lösemittels erfolgt, wobei die Menge an zuströmenden oder zudosierten Dispergierwasser gleich der Menge an abdestilliertem organischen Lösungsmittel ist.

3. Verfahren gemäß Anspruch 2, **dadurch gekennzeichnet, dass** in Schritt (I) das Stoffinengenverhältnis von Isocyanatgruppen zu mit Isocyanat reaktiven Gruppen 1,0 bis 3,5 beträgt.

4. Verfahren gemäß Anspruch 2, **dadurch gekennzeichnet, dass** die Reaktionstemperatur im ersten Schritt zwischen 20 - 130°C liegt.

5. Verfahren gemäß Anspruch 2, **dadurch gekennzeichnet, dass** als organisches Lösungsmittel Aceton oder 2-Butanon eingesetzt wird.

6. Verfahren gemäß Anspruch 2, **dadurch gekennzeichnet, dass** der Füllgrad des Reaktors während der gesamten Zugabe des Dispergierwassers konstant bleibt.

7. Verfahren gemäß Anspruch 2, **dadurch gekennzeichnet, dass** temperiertes Dispergierwasser eingesetzt wird, welches eine Temperatur von 20 bis 95 °C aufweist.

8. Verfahren gemäß Anspruch 2, **dadurch gekennzeichnet, dass** die Temperatur des Reaktionsgemischs bei der Kettenverlängerung in Schritt (III) zwischen 30 bis 70°C liegt.

9. Verwendung der wässrigen Polyurethan-Polyharnstoff(PUR)-Dispersionen gemäß Anspruch 1 zur Herstellung von Beschichtungsmitteln.

10. Beschichtungsmittel, enthalten die wässrigen Polyurethan-Polyharnstoff(PUR)-Dispersionen gemäß Anspruch 1.
